(19) Europäisches Patentamt
European Patent Office
Office européen des brevets

(11) EP 1 741 749 B1

(12) FASCICULE DE BREVET EUROPEEN

(45) Date de publication et mention de la délivrance du brevet:
**15.09.2010 Bulletin 2010/37**

(51) Int Cl.:
***C08L 27/18*** *(2006.01)* ***C08K 3/30*** *(2006.01)*
*C08L 79/08* *(2006.01)* *H01B 3/44* *(2006.01)*
*H01B 13/34* *(2006.01)*

(21) Numéro de dépôt: **06291122.7**

(22) Date de dépôt: **07.07.2006**

(54) **Matériau apte au marquage laser ultraviolet, à base de fluoropolymère**

UV-lasermarkierbares Fluorpolymer-Material

Ultraviolet laser-markable material based on fluoropolymer

(84) Etats contractants désignés:
**DE FR GB IT**

(30) Priorité: **07.07.2005 FR 0507246**

(43) Date de publication de la demande:
**10.01.2007 Bulletin 2007/02**

(73) Titulaire: **AXON'CABLE**
**51210 Montmirail (FR)**

(72) Inventeur: **Yeung, Chor K.**
**52600 Chaudenay (FR)**

(74) Mandataire: **Barbin le Bourhis, Joël et al**
**Cabinet Beau de Loménie**
**158, rue de l'Université**
**75340 Paris Cedex 07 (FR)**

(56) Documents cités:
**EP-A- 0 367 629** **EP-A- 1 384 753**
**FR-A- 2 732 030**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

L'invention concerne un matériau apte au marquage laser ultraviolet, à base de fluoropolymère et un revêtement de câble réalisé à base de ce matériau.

Les fluoropolymères sont des matériaux qui, d'une part, ont de bonnes propriétés d'isolation électrique et, d'autre part, sont capables de supporter des hautes températures en continu.

De ce fait, ces matériaux sont connus pour leur utilisation dans la fabrication de revêtements pour câbles électriques.

Par ailleurs, il est connu de marquer les câbles pour pouvoir les identifier l'un par rapport à l'autre, notamment lors d'un montage, en particulier à l'aide d'un marquage par laser ultraviolet. En effet, la technologie de marquage par laser ultraviolet a l'avantage de générer un marquage indélébile dans le revêtement. C'est la matière ou l'additif dans la matière, qui réagit avec le laser pour donner le marquage.

Cependant, les fluoropolymères ne sont pas réactifs aux lasers ultraviolets. De ce fait, il est connu de recourir à des additifs pour les rendre marquables. L'additif habituellement mis dans les fluoropolymères est le pigment blanc de titane (dioxyde de titane), dont la concentration utilisée varie de 2 à 4 % en poids par rapport au fluoropolymère.

Le marquage du dioxyde de titane est basé sur la réaction de réduction sous l'effet du laser ultraviolet. Le composé obtenu sous forme de $Ti_xO_y$ où y/x est inférieur à 2, a une couleur gris bleuté.

Cependant, le contraste, défini par la valeur

$\left(1-\frac{Lm}{Lf}\right)\times 100\%$ où Lm et Lf représentent respectivement la luminance du fond et la luminance du marquage,

n'atteint que 50 à 65 %, quand le marquage est réalisé sous un flux d'énergie 1 $J/cm^2$. En outre, la réaction n'est pas irréversible, ce qui entraîne une atténuation du contraste avec le temps.

D'autres additifs connus permettent de générer un contraste plus important, de l'ordre de 70 %. Il s'agit en particulier des polymères aromatiques qui se carbonisent sous l'effet du laser, pour donner un marquage très foncé persistant dans le temps.

Cependant, l'utilisation de ces polymères additifs n'est pas compatible avec le procédé de transformation du matériau dans lequel il est ajouté. En effet, le frittage, auquel est soumis le matériau, entraîne généralement une dégradation importante des additifs. En outre, la quantité d'additifs mélangée à la pâte de polymère avant extrusion a une influence directe sur la pression d'extrusion. Ainsi, il est nécessaire de limiter la quantité d'additifs pour maintenir une pression d'extrusion convenable et stable qui ne risque pas de générer des défauts au sein du matériau fini.

Il est connu, en particulier d'après le document EP 1 384 753, que certains additifs organiques du type polyimide permettent d'obtenir un matériau marquable par laser ultraviolet avec un contraste élevé.

Cependant, l'utilisation de ces polymères aromatiques augmente le risque de cheminement d'arc électrique et de cloques qui peuvent se former dans la partie du matériau marqué au laser. En effet, il a été remarqué dans le procédé de marquage, la formation de cloques qui peut s'expliquer par le dégazage qui a lieu lors de la réaction des additifs avec le laser ultraviolet.

Le but de l'invention est de fournir un matériau apte au marquage laser ultraviolet, à base de fluoropolymère et un revêtement de câble à base dudit matériau, dont le marquage présente un contraste élevé, sans pour autant entraîner la formation de cloques dans le matériau.

Ce but de l'invention est atteint par le fait que le matériau apte au marquage laser ultraviolet, à base de fluoropolymère, comporte :

- un additif pigmentaire réactif au marquage laser ultraviolet, en quantité supérieure ou égale à 0,5 % en poids par rapport au fluoropolymère et inférieure ou égale à 1,2 % en poids par rapport au fluoropolymère,
- un additif organique polyimide, en quantité supérieure ou égale à 0,05 % en poids par rapport au fluoropolymère et inférieure à 0,5 % en poids par rapport au fluoropolymère.

En effet, il a été constaté que pour résoudre le problème de décollement ou formation de cloques dans la réaction avec le laser, il est nécessaire d'associer un additif pigmentaire et un additif organique capable d'absorber en partie l'énergie provenant du laser, pour atténuer l'effet du laser sur le pigment.

Le fluoropolymère est préférentiellement un polytétrafluoréthylène PTFE.

L'additif organique polyimide est de préférence un polyimide qui comporte préférentiellement des motifs répétitifs, dont 60 % au moins contiennent au moins un groupement Ar - X - Ar', dans lequel Ar et Ar' représentent chacun l'un des groupes aryle monovalent et aryle divalent, et X représente l'un des groupes - CO- et -S-.

En fait, il est avantageux de choisir un polyimide de la marque P84®, qui correspond à un polymère comportant des motifs de formule

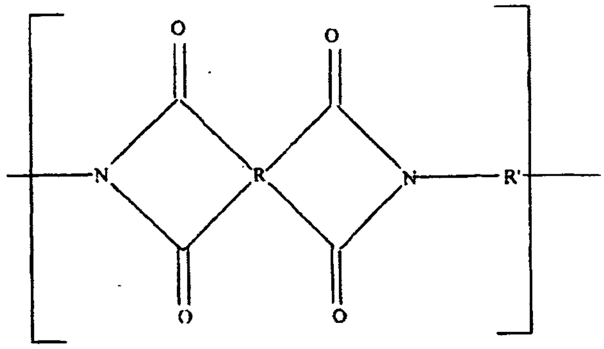

dans laquelle R est un groupe aromatique du type

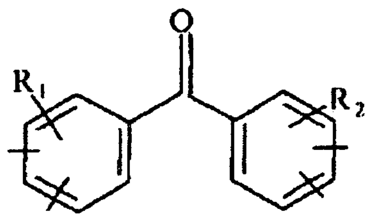

avec $R_1$ et $R_2$ représentant H, et R' est un groupement du type

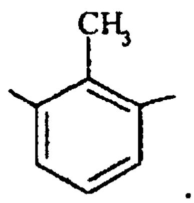

L'additif pigmentaire est préférentiellement à base de cadmium ou de cérium ; il est en particulier choisi parmi le sulfure de cadmium, le sulfo-sélénure de cadmium, le sulfure de cérium et le sulfo-lanthanure de cérium.
L'invention sera bien comprise et ses avantages apparaîtront mieux à la lecture de la description détaillée qui suit, de modes de réalisation de l'invention représentés à titres d'exemples non limitatifs.
La description se réfère aux dessins annexés sur lesquels :

- la figure 1 représente une vue de dessus d'échantillons marqués par laser,
- la figure 2 représente une vue de dessus d'autres échantillons marqués par laser, et
- la figure 3 représente une vue de dessus d'un échantillon selon l'invention marqué par laser.

Les exemples qui suivent sont donnés pour illustrer la présente invention et ses avantages.
Le matériau selon l'invention peut être obtenu par extrusion ou par rubanage sous forme de ruban destiné à être enroulé à la surface d'un câble électrique.
Les exemples 1 à 4 suivants illustrent les résultats que l'on obtient, en terme de contraste et lisibilité du marquage et cloquage éventuel, pour des matériaux réalisés à partir d'un mélange de PTFE avec un unique additif ; l'additif pouvant être un additif organique du type polyimide, comme illustré dans l'exemple 1 ou un additif pigmentaire réactif au marquage laser ultraviolet, comme illustré dans les exemples 2 à 4.
L'exemple 5 illustre le cas où deux additifs pigmentaires réactifs au marquage laser ultraviolet ont été mélangés à un PTFE.
Les exemples 6 et 7 illustrent un matériau selon l'invention, qui comporte :

- un additif pigmentaire réactif au marquage laser ultraviolet, en quantité supérieure ou égale à 0,5 % en poids et inférieure ou égale à 1,2 % en poids, et
- un additif organique du type polyimide, en quantité supérieure ou égale à 0,05 % en poids et inférieure à 0,5 % en poids.

EXEMPLE 1

L'exemple 1 illustré par les résultats résumés dans le tableau 1 concerne des câbles qui ont été soumis au faisceau d'un laser ultraviolet de type « Excimer » à un flux d'énergie nominal de 0,7 J/cm$^2$, après avoir été recouverts avec un revêtement en PTFE contenant des quantités variables d'un additif polymère comportant des motifs de formule

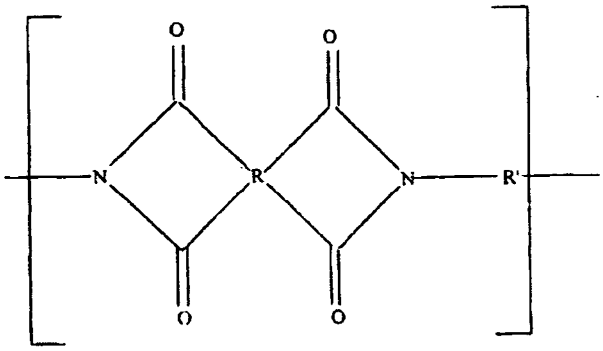

dans laquelle R est un groupe aromatique du type

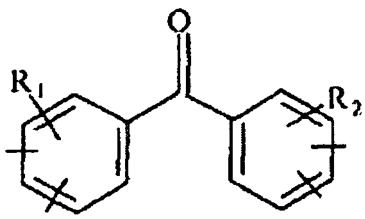

avec $R_1$ et $R_2$ représentant H, et R' est un groupement du type

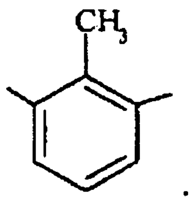

En l'espèce, le polyimide utilisé est un polyimide P84® en poudre, commercialisé par « HP-Polymer Inc. ».

Tableau 1

| Echantillon | % additif P84® / PTFE | Observation | Contraste |
|---|---|---|---|
| C21 | 1,5 | Décollement + cloques | Très foncé (75 à 83 %) |
| C22 | 1,0 | Décollement + cloques | Foncé (72 à 80 %) |
| C23 | 0,5 | Décollement + cloques | Foncé (73 à 80 %) |

On constate que les échantillons C21 à C23 présentent tous un fort contraste, supérieur à 70 %, dû à la présence du polyimide. Par contre, les échantillons présentent tous un cloquage au niveau du marquage laser.

EXEMPLE 2

L'exemple 2 dont les résultats sont regroupés dans le tableau 2 concerne une série de câbles extrudés en PTFE de gauge 22 (AWG 22) contenant des quantités variables d'additif pigmentaire.

En l'espèce, l'additif utilisé est un pigment orange à base de sulfures de terres rares, en particulier un sulfo-lanthanure de cérium commercialisé sous la marque Neolor™.

Les câbles ont été soumis à un faisceau laser ultraviolet de type « Excimer » à un flux d'énergie nominal de 1 J/cm$^2$.

Tableau 2

| Echantillon | % pigment/PTFE | Coloration | Observations | Contraste |
|---|---|---|---|---|
| C11 | 2 | Opaque | Cloques | Moyen (40 à 48 %) |
| C12 | 1,5 | Opaque | Cloques | Moyen (40 à 47 %) |
| C13 | 1,0 | Bonne | Cloquage suspect | Assez Bon (44 à 50 %) |
| C14 | 0,5 | Claire | Pas de cloque visible | Assez Bon (47 à 52 %) |

La forte pigmentation rend difficile la lisibilité du marquage. En outre, il est constaté un décollement et un cloquage dus au marquage laser, en particulier pour les échantillons C11 et C12, ce qui accentue d'autant la difficulté de lisibilité du marquage réalisé.

En fait, les pigments de type sulfure, sulfo-sélénure ou sulfo-lanthanure, répondent vivement au laser ultraviolet. Cependant, cette réaction assez violente provoque un décollement de la couche de polymère au-dessus du marquage et ce dernier, de bon contraste, devient illisible, tel qu'illustré sur la figure 1.

En baissant le taux de pigmentation, le marquage est meilleur, mais la coloration est insuffisante, comme illustré par les résultats obtenus pour l'échantillon C14.

Globalement, les résultats sont assez mauvais, puisque le contraste ne dépasse pas les 52 %.

EXEMPLE 3

Des mélanges de PTFE lubrifié ont été préparés à 1,2 % de pigment rouge de sulfo-sélénure de cadmium et avec un additif de mica commercialisé par « Merck » sous le nom « Iriodin », en quantité massique de 1, 1,5 et 2 % par rapport au PTFE. Les pigments de sulfo-sélénure de cadmium ont une couleur qui varie du jaune au rouge, en passant par l'orange, selon les proportions de sulfure et de sélénure de cadmium en présence.

L'extrusion a été réalisée à l'aide d'une machine « Davis » pour obtenir, après frittage, des câbles de gauge 22.

Les décollement et cloquage sont observés sur tous les échantillons marqués par laser ultraviolet. Aucune amélioration n'a été remarquée par rapport aux exemples 1 et 2 précités.

EXEMPLE 4

En remplaçant l'additif de mica de l'exemple 3 par un additif retardateur de flamme, à base de borate de zinc commercialisé par « Alcan Chemicals » sous le nom de « Flamtard », aucune amélioration notable n'a été constatée.

Le mica joue un rôle de dissipateur thermique, tandis que le « Flamtard » est un retardateur de flamme qui absorbe l'énergie thermique par des réactions endothermiques.

L'inefficacité de ces deux additifs montre bien qu'il faut atténuer l'énergie du laser, plutôt que de chercher à dissiper la chaleur générée au marquage.

Il est donc nécessaire de trouver des additifs qui permettent, sous une énergie de laser moindre, d'obtenir un bon contraste. En effet, le flux d'énergie nominal est généralement de l'ordre de 1 J/cm$^2$, mais comme décrit précédemment entraîne un cloquage du revêtement. Les exemples suivants sont obtenus avec un flux d'énergie nominal inférieur à 1 J/cm$^2$, en l'espèce de l'ordre de 0,7 J/cm$^2$.

EXEMPLE 5

Le tableau 3 illustre l'exemple 5, dans lequel on a tenté de mélanger deux pigments de type distinct à un

matériau en PTFE, pour tenter d'améliorer le marquage et sa lisibilité, tout en évitant l'apparition de cloque.

En l'espèce, des câbles avec un revêtement PTFE obtenus par rubanage ont été pimentés sur une épaisseur de 64 μm avec un pigment rouge de cadmium vendu par « Chimiray » sous la référence « P4706 », additionnée d'un pigment blanc de titane.

Tableau 3

| Echantillon | % pigment rouge/PTFE | % pigment blanc/PTFE | Observations | Contraste |
|---|---|---|---|---|
| C41 | 0,3 | 3 | Pas de cloque | Moyen (52 à 55 %) |
| C42 | 0,8 | 0,5 | Cloques | Foncé (46 à 52 %) |

L'échantillon C41 présente un marquage correct, de couleur rose, mais le contraste s'avère moyen (inférieur à 50 %), comme illustré sur la figure 2.

En ajustant les proportions des pigments rouge et blanc, pour avoir une teinte plus rouge, le contraste peut être plus élevé grâce en fait à la couleur plus sombre du matériau (rouge), mais le problème de décollement au marquage apparaît à nouveau.

En effet, les résultats montrent que dès lors qu'on arrive à obtenir un bon contraste (supérieur à 52 %), des cloques sont à nouveau visibles au niveau du marquage (échantillon C42), rendant ce dernier illisible.

EXEMPLE 6

Dans cet exemple, l'additif pigmentaire est le même pigment rouge de cadmium vendu par « Chimiray » sous la référence « P4706 », que celui utilisé dans l'exemple 5. Par contre, un polyimide P84®, tel que précité, remplace le pigment blanc de titane.

En l'espèce, des câbles ont été préparés de manière analogue à ceux de l'exemple 5, mais avec un mélange de 0,8 % de pigment rouge et 0,4 % de polyimide P84®, en proportion massique par rapport au PTFE.

Les résultats sont très concluants, puisque le marquage présente un contraste foncé (rouge) et qu'aucune cloque, ni décollement n'est visible au niveau du marquage.

EXEMPLE 7

Dans cet exemple, différentes proportions d'un même additif pigmentaire et différentes proportions d'un même additif organique ont été mélangées à des matériaux à base de PTFE, pour déterminer les proportions particulièrement avantageuses.

En l'espèce, l'additif pigmentaire est un sulfo-lanthanure de cérium commercialisé sous la marque Neolor™ tel que celui utilisé dans l'exemple 2, tandis que l'additif organique est un polyimide P84®, tel que celui des exemples 1 et 6.

Les résultats obtenus pour de tels câbles extrudés et marqués au laser ultraviolet sont illustrés dans le tableau 4.

En fait, trois quantités différentes d'additif pigmentaire et deux quantités différentes d'additif organique ont été testées.

Tableau 4

| Echantillon | % pigment/PTFE | % P84®/PTFE | Observations | Contraste |
|---|---|---|---|---|
| C31 | 2 | 0,495 | Léger décollement | Moyen (60 à 70 %) |
| C32 | 1 | 0,495 | Pas de décollement | Fort (77 à 80 %) |
| C33 | 0,5 | 0,495 | Pas de décollement | Fort (76 à 81 %) |
| C34 | 2 | 0,25 | Décollement suspect | Moyen (64 à 72 %) |
| C35 | 1 | 0,25 | Pas de décollement | Fort (76 à 78 %) |
| C36 | 0,5 | 0,25 | Pas de décollement | Clair (73 à 77 %) |

Les échantillons C31 et C34, pour lesquels la quantité de pigment orange Neolor™ est de 2 %, présentent un léger décollement et un cloquage au niveau du marquage, et présentent en outre, un contraste léger.

Par contre, les échantillons C33 et C36, pour lesquels la quantité de pigment orange Neolor™ est abaissée à 0,5 %, présentent de bons résultats et en tout cas, meilleurs que ceux obtenus pour les échantillons C31 et C34.

Des résultats particulièrement avantageux en termes de contraste et de netteté du marquage sont obtenus pour les échantillons C32 et C35, pour lesquels la quantité de pigment orange Neolor™ se situe entre les deux extrêmes précités, i.e sensiblement égale à 1 %, tandis que les quantités d'additif organique sont sensiblement égales à 0,25 et 0,495 %. Le marquage obtenu est illustré sur la figure 3.

Pour obtenir environ 1 % de pigment orange, il faut environ 200 $\mu g/cm^2$ pour un revêtement de l'ordre de 0,1 mm d'épaisseur de PTFE.

Ainsi, comme illustré à titre d'exemple non limitatif dans les exemples 6 et 7, des matériaux à base de fluoropolymère qui comportent :

- un additif pigmentaire réactif au marquage laser ultraviolet, en quantité supérieure ou égale à 0,5 % en poids et inférieure ou égale à 1,2 % en poids, et
- un additif organique du type polyimide, en quantité supérieure ou égale à 0,05 % en poids et inférieure à 0,5 % en poids, permettent d'obtenir un marquage net et lisible, avec un fort contraste.

## Revendications

1. Matériau apte au marquage laser ultraviolet, à base de fluoropolymère, **caractérisé en ce qu'**il comporte :

   - un additif pigmentaire réactif au marquage laser ultraviolet, en quantité supérieure ou égale à 0,5 % en poids par rapport au fluoropolymère et inférieure ou égale à 1,2 % en poids par rapport au fluoropolymère, et
   - un additif organique polyimide, en quantité supérieure ou égale à 0,05 % en poids et inférieure à 0,5 % en poids par rapport au fluoropolymère.

2. Matériau selon la revendication précédente, **caractérisé en ce que** le fluoropolymère est un polytétrafluoréthylène.

3. Matériau selon la revendication 1 ou 2, **caractérisé en ce que** le polyimide comporte des motifs répétitifs, dont 60 % au moins contiennent au moins un groupement Ar - X - Ar', dans lequel Ar et Ar' représentent chacun l'un des groupes aryle monovalent et aryle divalent, et X représente l'un des groupes - CO - et - S - .

4. Matériau selon la revendication précédente, **caractérisé en ce que** le polyimide est un polymère comportant des motifs de formule

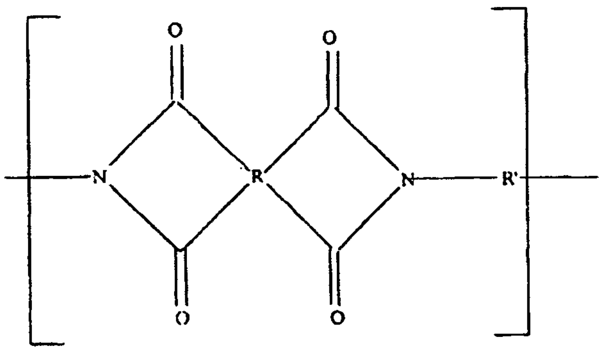

dans laquelle R est un groupe aromatique du type

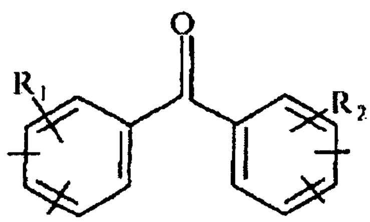

avec $R_1$ et $R_2$ représentant H, et R' est un groupement du type

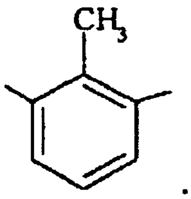

5. Matériau selon l'une quelconque des revendications précédentes, **caractérisé en ce que** l'additif pigmentaire est choisi parmi le sulfure de cadmium et le sulfo-sélénure de cadmium.

6. Matériau selon l'une quelconque des revendications précédentes, **caractérisé en ce que** l'additif pigmentaire est choisi parmi le sulfure de cérium et le sulfo-lanthanure de cérium.

7. Revêtement de câble, **caractérisé en ce qu'**il comporte un matériau selon l'une quelconque des revendications précédentes.

**Claims**

1. A material suitable for ultraviolet laser marking, based on a fluoropolymer, **characterized in that** it includes:

   - a pigmentary additive reactive to ultraviolet laser marking, in an amount greater than or equal to 0.5% by weight based on the fluoropolymer and of less than or equal to 1.2% by weight based on the fluoropolymer,
   - a polyimide organic additive, and an amount greater than or equal to 0.05% by weight and less than 0.5% by weight based on the fluoropolymer.

2. The material according to the preceding claim, **characterized in that** the fluoropolymer is a polytetrafluoroethylene.

3. The material according to claim 1 or 2, **characterized in that** the polyimide includes recurrent units, at least 60% of which contain at least one Ar-X-Ar' group, wherein Ar and Ar' each represent one of the monovalent aryl and divalent aryl groups, and X represents one of the groups -CO- and -S-.

4. The material according to the preceding claim, **characterized in that** the polyimide is a polyimide including units of formula

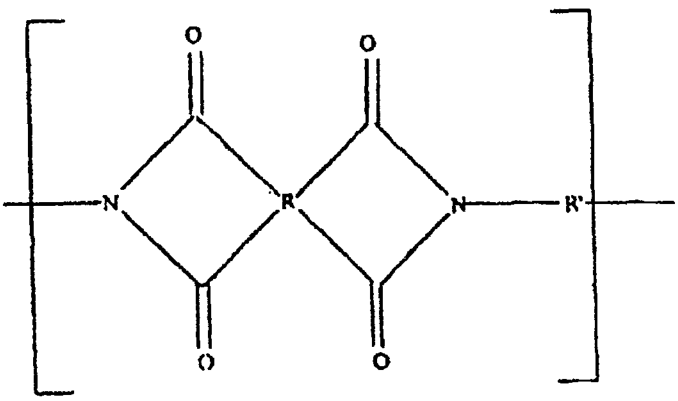

wherein R is an aromatic group of the type

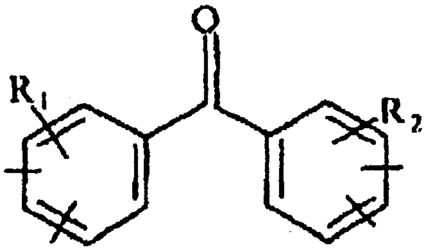

with $R_1$ and $R_2$ representing H, and R' is a group of the type

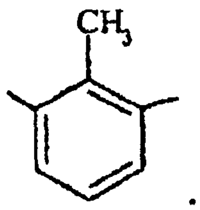

5. The material according to any of the preceding claims, **characterized in that** the pigmentary additive is selected from cadmium sulfide and cadmium sulfo-selenide.

6. The materialn according to any of the preceding claims **characterized in that** the pigmentary additive is selected from cerium sulfide and cerium sulfo-lanthanide.

7. A cable cladding, **characterized in that** it includes a material according to any of the preceding claims.

**Patentansprüche**

1. Material, das sich zur UV-Lasermarkierung eignet, auf der Basis von Fluorpolymer, **dadurch gekennzeichnet, daß** es umfaßt:

   - ein für UV-Lasermarkierung reaktives Pigmentadditiv in einer Menge größer oder gleich 0,5 Gew.-%, bezogen auf das Fluorpolymer und kleiner oder gleich 1,2 Gew.-%, bezogen auf das Fluorpolymer und
   - ein organisches Polyimidadditiv in einer Menge größer oder gleich 0,05 Gew.-% und kleiner als 0,5 Gew.-%, bezogen auf das Fluorpolymer.

2. Material nach dem vorhergehenden Anspruch, **dadurch gekennzeichnet, daß** das Fluorpolymer ein Polytetrafluorethylen ist.

3. Material nach Anspruch 1 oder 2, **dadurch gekennzeichnet, daß** das Polyimid sich wiederholende Struktureinheiten umfaßt, wovon mindestens 60 % mindestens eine Ar-X-Ar'-Gruppe enthalten, worin Ar und Ar' jeweils für eine der einwertigen Arylgruppen und eine der zweiwertigen Arylgruppen stehen, und X für eine der Gruppen -CO- und -S- steht.

4. Material nach dem vorhergehenden Anspruch, **dadurch gekennzeichnet, daß** das Polyimid ein Polymer ist, das Struktureinheiten mit der folgenden Formel umfaßt:

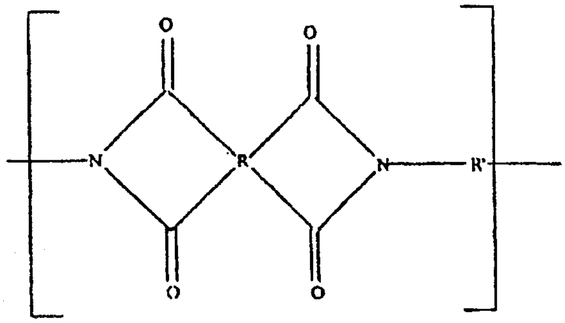

worin R eine aromatische Gruppe folgenden Typs ist:

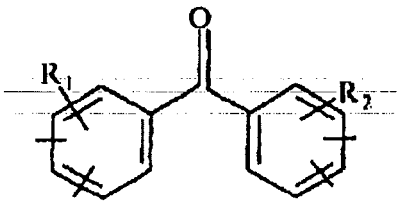

wobei $R_1$ und $R_2$ für H stehen, und R' eine Gruppe folgenden Typs ist:

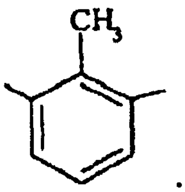

5. Material nach irgendeinem der vorhergehenden Ansprüche, **dadurch gekennzeichnet, daß** das Pigmentadditiv aus Cadmiumsulfid und Cadmiumsulfoselenid ausgewählt ist.

6. Material nach irgendeinem der vorhergehenden Ansprüche, **dadurch gekennzeichnet, daß** das Pigmentadditiv aus Ceriumsulfid und Ceriumsulfolanthanoid ausgewählt ist.

7. Kabelummantelung, **dadurch gekennzeichnet, daß** sie ein Material nach irgendeinem der vorhergehenden Ansprüche umfaßt.

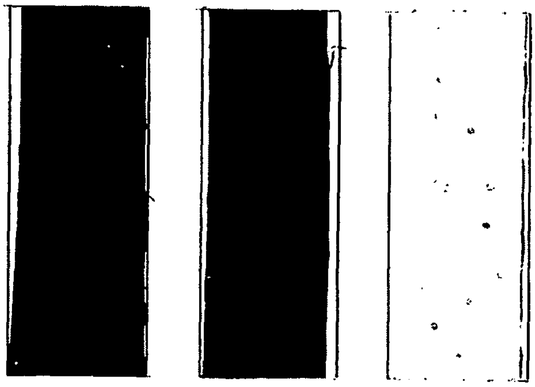

FIG.1

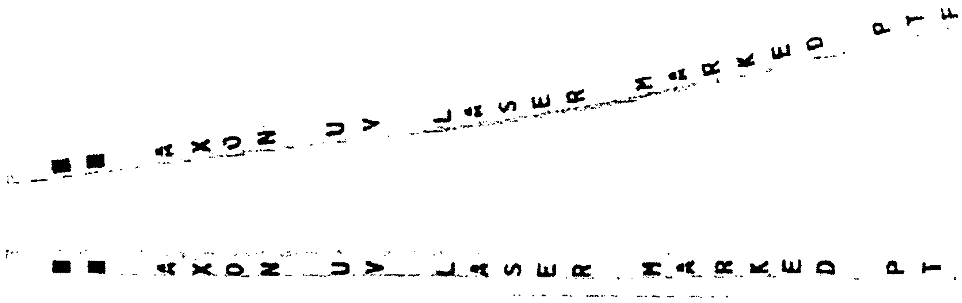


FIG.2

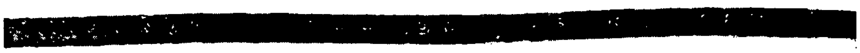

FIG.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 1384753 A